# EUROPEAN PATENT SPECIFICATION

(11) **EP 1 980 538 B1**
(45) Date of publication and mention of the grant of the patent: **14.10.2009**
(21) Application number: 07108207.7
(22) Date of filing: 15.05.2007
(51) Int. Cl.: C02F 1/76

(54) **Water purification system**
Wasserreinigungssystem
Système de purification d'eau

(30) Priority: 28.03.2007 IN MU05702007
(43) Date of publication of application: 15.10.2008
(73) Proprietor: Unilever N.V., 3013 AL Rotterdam (NL)
(72) Inventor: Kadam, Manoj Krishna, Whitefield P.O., Bangalore, 560 066 (IN); Nadakatti, Suresh Murigeppa, Whitefield P.O., Bangalore, 560 066 (IN); Tendulkar, Mahesh Subbash, Whitefield P.O., Bangalore, 560 066 (IN)
(74) Representative: Rosen Jacobson, Frans Lucas M.

(56) References cited:
- GB-A- 1 375 580
- US-A- 4 333 299
- US-A- 4 646 510
- US-A1- 2004 026 657
- US-B1- 6 461 535

## Description

### FIELD OF THE INVENTION

The invention relates to a water purification system, a method of purifying water using the system and a method of manufacture of the water purification system. The invention particularly relates to a water purification system for packing small quantities of solid chlorine disinfectant which is stable for long period of time thereby ensuring that sufficient chlorine is available for killing of harmful micro-organisms in water to make it safe for human consumption.

### BACKGROUND AND PRIOR ART

There are billions of people, especially in the underdeveloped and developing countries, especially in the rural areas who do not have purified water piped to their homes. Municipal water treatment systems are generally not available in these areas. They have to collect the water from sources like rivers, wells, lakes, streams and bore-wells in pots and store them in their homes for both cooking and drinking purposes. Such water is often infected with harmful micro-organisms like cyst, virus and bacteria. The mortality and morbidity especially in infants and small children is high in these areas due to the consumption of such contaminated water. People are generally becoming aware that boiling of water makes the water microbiologically safe, but many people merely heat the water to about 60 to 70°C rather than boil for 20 minutes as recommended by the WHO. Further boiling of water is expensive and requires availability of fuel like coal, kerosene or wood which are increasingly becoming scarce. Advanced home purification systems like UV (ultra-violet), RO (reverse-osmosis) etc require continuous flow of water and electricity which is also not available on a continuous basis in these areas. Thus, there has always been a need to provide a simple, easy to use, inexpensive and safe method to provide the drinking water requirement for these people.

Halogen based disinfectants have traditionally been used to kill the micro-organisms in water. Such disinfectants include iodine, iodinated resins, chlorine compounds like calcium hypochlorite, sodium dichloro isocyanuric acid (NaDCCA), trichloroisocyanuric acid (TCCA) etc. These disinfectants are very effective in killing micro-organisms but above mentioned ground sources not only come contaminated with micro-organisms but also other contaminants like suspended dust and soil and dissolved impurities in trace amounts like organic impurities, dissolved salts, and pesticide residues. It is also important to remove these impurities in order to make the water fit for human consumption. In such situations a combination of flocculation and disinfections has been suggested and used in the past.

WO96/32194 (1996, Truetech) describes a water treatment composition in unit dose form e.g. a tablet capable of batch wise purification of water for drinking purposes comprising basically a disinfecting agent which is an organo chlorine compound, a coagulant-precipitate agent, a primary and a secondary flocculent, a dispersion-buffer agent, an agglomeration matrix and pre-filter and a bulk ion-exchange absorbent. The present inventors have found that use of organo chlorine compound is effective in disinfection and the tablet has high stability in terms of available chlorine even when stored over long periods of time in hot and humid conditions. However, the organo chlorine componds suffer from the drawback that after the chlorine is released from the compound when it is dissolved in water, the residual organic compound e.g cyanuric acid is harmful and has to be removed from the water. This necessitates the use of scavengers like activated carbon which can be cumbersome to use for the home user.

WO02/00557 (P&G) describes a water purification composition comprising essentially a primary coagulant, a bridging flocculent, a coagulant aid and optionally a disinfectant. This patent application also claims a method for clarifying and purifying water, which comprises several stages selected from coagulation and flocculation, disinfection, filtration, neutralisation and nutrifying.

EP0066421 (Buchan, 1982) describes a composition in unit dose form for a single step batch purification of relatively small amount of water using a combination of solid inorganic metal salt having trivalent cation, a solid water soluble alkali, a solid anionic polymeric hydrophilic colloid and optionally a bactericide.

US2004/0026657 discloses compositions, methods and kits for Purifying and clarifying and/or nutrifying contaminated drinking water and which comprise a primary coagulant material and a bridging flocculent material the levels and ratios of coagulant to flocculent preferably falling within certain ranges. Highly preferred compositions also contain one or more of a cationic coagulant aid, especially chitosan, a microbiocidal disinfectant, a water-soluble alkali, a water-insoluble silicate, and a food additive or nutrient source. US2004/0026657 further discloses water treatment compositions for batchwise purification of Predetermined volumes of drinking water and the use of [0028] and the use of low-moisture calcium hypochlorite as biocide [0050].

Although both of the above publications, by P&G and by Buchan, are directed to purification of water using a combination of flocculation and disinfection (using inorganic chlorine based compounds), the disclosure therein are directed to compositions.

Although both of the above publications, by P&G and by Buchan, are directed to purification of water using a combination of flocculation and disinfection (using inorganic chlorine based compounds), the disclosure therein are directed to compositions comprising a unit dose wherein the entire composition is mixed and packed for use by the consumer. The compositions disclosed in these two publications are better than the one by Truetech in one sense, in that inorganic chlorine compounds are used as disinfectants which are effective and has a residue which is harmless to consume unlike organic chlorine compounds. The present inventors have also been working on this area for a long time and one problem they have faced is that inorganic chlorine compounds like calcium hypochlorite are very unstable especially in the presence of moisture. In a single dose formulation the other ingredients of the composition like clay etc are hygroscopic and tend to pick up moisture which leads to the instability of the chlorine compound, thereby reducing the amount of available chlorine by the time the consumer uses the composition. The above publication by P&G talks of achieving optimum purification wherein the disinfecting agent is preferably used in controlled, delayed, sustained or slow release form. Means for providing such slow release include blending, or coating the chlorine compound with a poorly water soluble or hydrophobic material. The present inventors have found that these kinds of compositions require a long time of stirring of the compositions with the water to be purified in order to achieve the desired dissolution and efficacy and it is desirable to provide for shorter stirring times to facilitate ease of operation for the consumer. Further, in the prior art, high amount of purification compositions are needed for achieving the desired quality of purified water.

The present inventors have worked diligently on solving this problem and developed a water purification system for ensuring that the purified water meets the desired standards for removal of unsafe micro organisms. The system involves inorganic chlorine compound having pre-selected properties and packed in a sachet. The amount of chlorine required in water for disinfection purposes has to be in a narrow window viz. 6 to 10 ppm by weight. If it is too low, the desired disinfection does not happen in the desired time of less than 5 minutes. If it is too high, high levels of quencher needs to be used in subsequent treatments which may alter the taste of water. Thus, the amount of inorganic chlorine compound like calcium hypochlorite to be packed in a sachet for use by a home consumer having a vessel of water of about 10 to 50 litres is of the order of 0.05 to 0.5 grams. It is very difficult to pack such low amounts of material especially corrosive material, like calcium hypochlorite in a sachet. This is especially so since the technology is meant for the mass market, where billions of such sachets will have to be manufactured at low cost, high reliability and high speed. The present inventors searched far and wide for a packaging technology to meet this requirement and could not find any. While some available technologies could not meet the stringent requirement of accurate weighment, others had problems with the flow properties of the chlorine compound used. The present inventors then set about solving this problem. They found that if the calcium hypochlorite meet certain pre-specified properties, it is possible to pack the desired low amount in a sachet, meet the high accuracy of weighment, provide reliability in high speed packaging, all while ensuring that the storage stability of the packed chlorine compound is not compromised.

JP2002136975 (Anto KK) discloses a method of metering, handling and sterilizing small amount of drinking water by adding calcium sulphate to calcium hypochlorite to increase the volume of calcium hypochlorite. The present inventors found this technology unsuitable since the stringent storage stability criterion of not more then 20% loss of available chlorine in the packed composition, could not be met.

It is thus an object of the present invention to provide for a water purification system that enables packing of inorganic disinfectant like calcium hypochlorite in a sachet in small amount of 0.05 to 0.5 grams.

It is another object of the present invention to provide for a water purification system with a sachet containing 0.05 to 0.5 grams of calcium hypochlorite where loss of available chlorine is not more than 20% when stored at 40°C and 85% relative humidity for three months.

It is yet another object of the present invention to provide for method to form and pack sachets containing 0.05 to 0.5 grams of calcium hypochlorite in a high speed machine at high reliability of weighment while not compromising on the storage stability of the calcium hypochlorite.

It is yet another object of the present invention to provide for a water purification system that ensures purification of raw water to meet the stringent WHO removal criteria of log 6 of bacteria, log 4 of virus and log 3 of cysts using the flocculation-disinfection means.

### SUMMARY OF THE INVENTION

According to one aspect of the present invention there is provided a water purification system comprising a sachet containing 0.05 to 0.5 grams of granules of calcium hypochlorite having 55 to 68% available chlorine, and up to 3% moisture, at least 80% of said granules having particle size between 300 to 850 microns; wherein said sachet contains two compartments, a first compartment containing said granules, and a second compartment containing a flocculating composition; and wherein said flocculating composition comprises a quencher.

It is particularly preferred that the sachet of the water purification system of the invention is made of a laminate of a polymer and a metal.

According to another aspect of the invention there is provided a method of purifying water using the water purification system of the invention comprising the step of mixing the contents of the sachet with the water to be purified.

According to yet another aspect of the invention there is provided a method of forming and filling the sachet of the water purification system of the invention comprising the steps of
a) forming a sachet by sealing the overlapping longitudinal and bottom edges of two superimposed laminates;
b) providing a seal across a longitudinal section of the sachet to form two compartments;
c) filling said first compartment of the sachet with said calcium hypochlorite granules from a cup of predetermined volume and said second compartment of the sachet with the flocculating composition; and
d) sealing the overlapping top edges

Finally the invention provides the use of granules of calcium hypochlorite having 55 to 68% available chlorine, and up to 3% moisture, at least 80% of said granules having particle size between 300 to 850 microns for packing in a sachet in ain amount in the range of 0.05 to 0.5 grams; wherein said sachet contains two compartments, a first compartment containing said granules, and a second compartment containing a flocculating composition; and wherein said flocculating composition comprises a quencher.

### DETAILED DESCRIPTION OF THE INVENTION

All parts herein are by weight unless otherwise specified.

The first aspect of the invention provides for a water purification system comprising a sachet containing very small amount of a selective disinfectant viz. calcium hypochlorite having very selective properties. The present inventors found that in order to meet the requirement of individual consumers and their families who have a requirement of potable water in pots or buckets of about 10 to 50 litres per day, it is required to provide very small amount of a chlorine compound for disinfection of the water in the order of 0.05 to 0.5 grams. The weight of the chlorine compound is different depending on the compound chosen, its molecular weight and its available chlorine, but is within this weight range.

The term 'available chlorine' is widely used in water purification industry. This term was originated for comparing the potential bleaching or oxidising or disinfecting power of chlorine compounds. This is accomplished by a quantitative analysis of the chlorine that is available for oxidising, by a method known as iodometric method. The term 'available chlorine' is the calculated weight of chlorine molecule (Cl₂) that is required to liberate the same amount of iodine molecule (I₂). As only half of the chlorine molecule is of positive valence (+1 oxidation state), when in solution, the available chlorine content of any chlorine compound that has Cl+ (e.g., HOCI) will always be twice the amount of this cation present.

In summary, the term 'available chlorine' refers to the oxidising power of the compound tested. More information can be found in 'Handbook of chlorine and alternative disinfectants', fourth edition, Geo. Clifford White, (John Wiley & sons Inc.)

Most chlorine disinfectants are very unstable especially in the presence of moisture and air and at high temperatures like 30 to 45°C which are prevalent in tropical countries. Calcium hypochlorite is a commonly used solid inorganic chlorine disinfectant. It is generally available in two forms. The more common form has the formula Ca(OCI)CI and is commonly referred to as stabilised bleaching powder (SBP). Commercially available bleaching powder generally has available chlorine in amounts in the range of 30 to 35 wt%. SBP is generally available in fine powder form and at low moisture content of less than 1 wt%. The other form of calcium hypochlorite is called high-strength hypochlorite and has the chemical formula Ca(OCl)₂. This can be commercially procured at available chlorine in the range of 60 to 65 wt%. Commercial High strength hypochlorite is generally available at a moisture content in the range of 5 to 10 wt%.

When the present inventors set about finding a solution to the present problem of providing a water purification system that can disinfect the water for individual consumers and their families in the rural areas, they realised that the disinfectant to be packed will have to be in very small amounts of less than 0.5 grams and very often as less as 0.1 gram. They found that packing technologies of such small amounts of materials is not very accurate and reliable especially for corrosive materials like chlorine compounds. They tried adding various fillers that will increase the weight of the material to be packed. They also worked at various processing conditions, tableting options and by using various disinfectant, each one of them of various properties. They found that there were many conditions that had to be met so that the product would meet all the requirements of the consumer. The product must be packed such that it is stable to enable sufficient amount of chlorine to ensure disinfection, at the same time available chlorine should not be so high that it makes the water difficult to consume. With most of the options tried, the inventors encountered many different problems like accuracy in weighment, choking and lack of reliability in filling of the sachet due to flow problems of the powder/ granules, poor stability of the chlorine compound packed, slow dissolution of the granule/powder among a host of other problems. The present inventors found that only when calcium hypochlorite which met the highly selective properties of having a moisture content of less than 3% and available chlorine of 55 to 68 wt%, a particle size such that more than 80% is in the size range of 300 to 850 microns, was it possible to pack it in a sachet in amounts in the range of 0.05 to 0.5 grams and yet meet all of the above contrasting requirements described above. If any of these properties were not met, one or more of the problems occurred and it was not possible to meet the objects of the invention.

It is preferred that at least 90% of the granules, more preferably at least 95% of granules of calcium hypochlorite are in the size range of 300 to 850 microns, said granules having less than 3% moisture and 55 to 68% available chlorine. It is preferred that the calcium hypochlorite has available chlorine in the range of 60 to 68 wt%, more preferably 60 to 65 wt%. As per the water purification system of the invention, the sachet preferably contains 0.1 to 0.25 grams of calcium hypochlorite granules. Calcium hypochlorite having the chemical formula Ca(OCl)₂ is especially preferred. It is preferred that the sachet additionally contains 2 to 10% calcium oxide with respect to weight of the calcium hypochlorite granules. It has been found that such compositions comprising calcium oxide provide further enhanced stability.

The packaging material is also important in achieving optimum stability and other desired properties of the disinfectant packed. The packaging material is preferably a laminate comprising a layer of aluminium and a layer of polyethylene. The polyethylene layer is generally in contact with the calcium hypochlorite granules. The aluminium layer is on the outside of the polyethylene layer. The aluminium layer may optionally be further layered with other one or more polymeric layers. Suitable polymer is polyethylene terephthalate (PET). The inner polyethylene layer is preferably at a layer thickness in the range of 30 to 100 microns, more preferably in the range of 35 to 75 microns. The thickness of the aluminium layer is preferably in the range of 5 to 15 microns, more preferably in the range of 8 to 12 microns.

The granules of calcium hypochlorite in the water purification system are so present that when stirred in water to be purified it dissolves in less than one minute. Using the water purification system of the invention the available chlorine in said granules reduces by less than 20%, more preferably less than 10 %, when the sachet stored for three months at 40 °C and 85% relative humidity.

A preferred aspect of the invention provides for a water purification system wherein the sachet contains two compartments, a first compartment containing the calcium hypochlorite granules and a second compartment containing a flocculating composition. When the sachet comprises two compartments, it is especially preferred that the external surface area of said first compartment is less than the external surface area of said second compartment. The reason for using the surface area relationship is because the amount of surface area available for ingress of moisture needs to be minimal to ensure minimal ingress of moisture for maximum stability.

The flocculating composition present in the second compartment preferably comprises a coagulating agent, which is a water soluble salt of a trivalent inorganic metal; a flocculating agent, which is a high molecular weight water soluble polymer; and an adsorbent clay.

The coagulating agent is a compound which is a water-soluble inorganic metal salt having trivalent cation. Suitable trivalent cations are AI³⁺ and Fe³⁺. The coagulant is generally free from carbon atoms. Examples of coagulating agents are ferric sulfate, aluminium sulfate and polyaluminium chloride. Without being limited by theory, it is believed that these coagulating agents when added to water form gelatinous hydroxide compounds at pH greater than or equal to 6. The mechanism of coagulation via the formation of gelatinous hydroxide is optimum when pH is adjusted between 6 and 8.5. The gelatinous precipitate entrains fine suspended particles and microbes as it settles or coagulates. The coagulating agent is preferably present in an amount in the range of from 5 to 50%, more preferably from 15 to 40% by weight of the flocculating composition.

The flocculating agent in the flocculating composition of this invention is a compound which is a high molecular weight water soluble polymer. Examples of flocculating agents are polysaccharides (dextane celluloses), proteins, modified celluloses (hydroxyethyl/hydroxypropyl or carboxymethyl), and polyacrylamides preferably high molecular weight polyacrylamide. It is especially preferred that the polyacrylamide is either anionic or non-ionically modified, more preferably anionically modified. Suitable molecular weights of these polyacrylamides are in the range of 10⁵ to 10⁷. Preferred flocculating agent is Superfloc (from Cytec). Preferred amounts of the flocculating agent is from 0.5 to 15%, more preferably from 1 to 10% and most preferably from 2 to 8% by weight of the flocculating composition.

The adsorbent clay in the flocculating composition are those clays which are capable of adsorbing high levels of water and organic or inorganic compounds. Examples of clay which may be included are Montmorillonite clay (dioctheydral smectite clay), Laponite, Hectorite, Nontronite, Saponite, Volkonsite, Sauconite, Beidellite, Allevarlite, lllite, Halloysite, Attapulgite, Mordenite, Kaolines, and Bentonite. A highly preferred clay as per this invention is Bentonite clay. When included, the adsorbent clay is present in an amount in the range of 5 to 75%, more preferably from about 10 to 60% by weight of the flocculating composition.

The flocculating composition preferably comprises a quencher which is capable of reacting with chlorine thereby making the water suitable for human consumption. Suitable quenchers are sodium thiosulphate or ascorbic acid. The quencher is preferably present in an amount in the range of 1 to 20%, more preferably from about 2 to 12% by weight of the flocculating composition.

Another optional ingredient which may be present in the flocculating composition is a buffering agent capable of maintaining the pH in the range of 6 to 8.5 when the flocculating composition is dissolved/dispersed in water. Suitable buffering agents are calcium oxide, sodium carbonate or sodium bicarbonate. The buffering agent, when present, is included in an amount in the range of 0.5 to 10% by weight of the flocculating composition.

The flocculating composition is preferably present in the second compartment of the sachet in amounts in the range of 0.5 to 10 grams more preferably in the range of 1 to 5 grams.

According to another aspect of the present invention there is provided a method of purifying water using the water purification system of the invention comprising the step of mixing the contents of the sachet with the water to be purified.

When the sachet is configured with two compartments the preferred method of purifying water comprises the steps of (i)mixing the contents of said first compartment with impure water, followed by; (ii)mixing the contents of said second compartment, to form flocs therein; and (iii)separating said flocs from said impure water to get purified water.

The contents of the first compartment are usually mixed for a period of time from 0.5 to 5 minutes and the water is then allowed to stand for a time period of 2 to 10 mins, after which the contents of the second compartment are added. The mixture is then mixed for a period of time from 0.5 to 5 minutes and again allowed to stand for 2 to 10 mins. The flocculated mass is then allowed to settle down and then separated from the mixture usually by filtration or decantation. A simple cloth may be used for filtration.

A batch of 10 to 50 litres of water can be purified using the water purification system of the invention. The inventive method of purification of water ensures 6-log removal of bacteria (examples 2-4), 4-log removal of viruses (examples 5 and 6) and 3-log removal of cysts (example - 7).

A preferred method of forming and filling the sachet comprising the steps of
(a) forming a sachet by sealing the overlapping longitudinal and bottom edges of two superimposed laminates;
(b) providing a seal across a longitudinal section of the sachet to form two compartments;
(c) filling said first compartment of the sachet with said calcium hypochlorite granules from a cup of predetermined volume and said second compartment of the sachet with the flocculating composition; and
(d) sealing the overlapping top edges.

According to yet another aspect of the invention there is provided granules of calcium hypochlorite having 55 to 68% available chlorine, and up to 3% moisture, at least 80% of said granules having particle size between 300 to 850 microns for use in packing in a sachet in an amount in the range of 0.05 to 0.5 grams.

The invention will now be illustrated by the following non-limiting examples.

### EXAMPLES

### Example 1 and Comparative Example - A to D

### Example - 1

A sample of calcium hypochlorite having chemical formula Ca(OCl)₂ having 60% available chlorine was dried to about 2.8% moisture. The sample was sieved to a particle size such that about 95% of the particles were between 300 to 800 microns. A form fill seal packing machine was used to pack the sample in a sachet made of a laminate having polyethylene as the inner layer, polyethylene terephthalate as the outer layer and aluminium layer in between the two. The machine was run for about an hour with out any problem and about ten sachets were sampled at random and the weight of the calcium hypochlorite granules in them were determined. The sachets were sought to be filled with an average target weight of 0.155 grams. The data on the weight variation is shown in Table -1

### Comparative Example - A

Sachets as per Example-1 were manufactured except that the calcium hypochlorite had a particle size such that 90%of the particle size were in the range of 500 to 2000 microns, 70 % was in the size range of 300 to 800 microns and 10% was in the size range of 150 to 500 microns. The data on weight variation from ten such randomly chosen sachets is summarized in Table - 1.

**Table-1**

| | Example - 1 | Comp. Ex - A |
|---|---|---|
| Average weight, grams | 0.155 | 0.165 |
| Range in weight, grams | 0.150 to 0.158 | 0.151 to 0.180 |
| Standard deviation, grams | 0.003 | 0.011 |

The data in Table- 1 indicates that very high control on the amount of calcium hypochlorite packed in a sachet can be achieved by using the calcium hypochlorite which meets the properties as per the invention (Example - 1) while the control is poor in the example outside the invention (Comparative Example - A).

### Comparative Example - B

Sachets were packed as per Example - 1 except that the initial moisture of the calcium hypochlorite was about 5.9%. These sachets were stored in a hot and humid chamber (85% relative humidity and 40 °C) for several weeks. Samples were withdrawn every few weeks. The contents of the sachets were dissolved in 10 litres of water by stirring for one minute. The available chlorine in 10 litres of water was measured. An average of two such measurements is summarized in Table - 2.

### Example- 1

Similar storage studies were conducted with samples prepared as per Example -1. The data on available chlorine as an average of two measurements is summarized in Table - 2. Available chlorine of more than 6 ppm in the water to be purified is considered acceptable after storage under these hot and humid conditions for three months.

**Table-2**

| Example-1:Initial moisture = 2.94% | | Comp Ex - B: Initial moisture = 5.87% | |
|---|---|---|---|
| Week | Available Chlorine (PPm) | Week | Available Chlorine (ppm) |
| 0 | 10.2 | 0 | 10.0 |
| 12 | 8.2 | 5 | 3.9 |

The data in Table- 2 indicates that calcium hypochlorite having properties outside the invention (Comparative Example - B) is unstable in less than 5 weeks of storage while sample as per the invention (Example - 1) meets the desired stability criteria.

### Comparative Example -C and D: Calcium hypochlorite with available chlorine and particle size outside the inventive range

Comparative Example -C: A sample of calcium hypochlorite having chemical formula Ca(OCl)Cl having about 30% available chlorine and a moisture content of 1% available commercially as stabilised bleaching powder, was used to fill sachets of 0.15 grams in a form-fill-seal packing machine. The particle size of the calcium hypochlorite was such that 90% of the particles were less than 250 microns in size. The observation during packing is summarized in Table -3.

Comparative Example - D: A sample as per Comparative Example -C was granulated to a particle size such that 90% of the particles were in the size range of 500 to 1500 microns. The observation on using sachets packed with this sample when dissolved in 10 litres of water is summarized in Table - 3.

**Table - 3**

| Comparative Example | Observation |
|---|---|
| C | The filling operation was difficult. The calcium hypochlorite particles stuck to the machine parts, the flow of the particles was poor and desired uniformity in filling could not be achieved. |
| D | Does not dissolve fully in water even after stirring for five minutes. |

The data in Table- 3 indicates that it is very difficult to sachet pack low amount of calcium hypochlorite having properties outside the selective range in terms of %available chlorine and particle size.

### Examples 2 to 7: Microbiological efficacy of system of the invention

Sachets as per Example - 1 were prepared. Test water with various levels of bacteria, polio virus and cyst were prepared and purified using the contents of the sachets. The amount of log removal of the various micro-organisms was measured. Methods to measure micro-organisms/ surrogates are using the method described in detail in the publication "Tropical Medicine and International Health, volume 11 no 9 pp 1399-1405 September 2006, in article titled "'Microbiological performance of a water treatment unit designed for household use in developing countries", by Thomas Clasen, Suresh Nadakatti and Shashikala Menon.
The data is summarized in Table - 4.

**Table - 4**

| **Microbes** | **Example** | **Input Conc.** | **Output Conc.** | **Log reduction** |
|---|---|---|---|---|
| Bacteria (*E-Coli)* | 2 | 2x10⁸ /100 mL | <10 | 8.30 |
| | 3 | 2x10⁶/100 mL | <10 | 6.30 |
| | 4 | 7x10⁶/100mL | <10 | 6.80 |
| Polio Virus (Sabin type 1) | 5 | 10^{4.25} pfu /50 µL | <10 | 4.25 |
| | 6 | 10^{4.10} pfu / 100 µL | <10 | 4.10 |
| Cyst (irradiated) | 7 | 5x10⁴ / L | 50/L | 3.00 |

The data in Table - 4 indicates that water of very high microbiological purity meeting the log 6 reduction for bacteria, log 4 reduction for virus and log 3 reduction for cyst can be attained using the system of the present invention.

### Example 8 and 9: Effect of inclusion of Calcium oxide:

### Example-8:

A sample similar to Example - 1 was prepared except that the amount of moisture at point of packing was 2.32%.

### Example - 9:

A sample similar to Example - 8 was prepared except that calcium oxide at 5 wt% of calcium hypochlorite included in the sachets.

In Example 8 and 9 the target weight was 0.17 grams. The sachets were made from a laminate having 70 micron polyethylene on the inside, overlayed by 12 micron of poly ethylene terephthalate (PET), overlayed by 9 micron of aluminium, overlayed by 12 micron of PET. The sachet samples were stored at HH condition (40 °C and 85% humidity) for several weeks. The samples were withdrawn every few weeks and contents of a sachet dissolved in 10 litres of water. The available chlorine in the 10 litre water was measured. The data is summarized in Table - 5.

**Table - 5**

| Example-8 | | Example - 9 | |
|---|---|---|---|
| Week | Available chlorine (ppm) | Week | Available chlorine (ppm) |
| 0 | 10.0 | 0 | 10.6 |
| 12 | 8.0 | 12 | 10.4 |
| 20 | 0.8 | 40 | 9.4 |

The data in Table - 5 indicates that sample as per the invention (Example -8) meets the desired storage stability criterion of available chlorine greater than 6 ppm on storage at HH condition for 12 weeks. Inclusion of calcium oxide gives enhanced stability of more than 40 weeks of storage at HH condition.

### Examples 10 to 19 :

Two compartment sachets were manufactured in a form-fill-seal packing machine. The first compartment was packed with 0.15 grams of calcium hypochlorite granules of the invention and the second compartment was packed with 1.85 grams of a flocculating composition as shown in Table - 6 below.

**Table - 6**

| First compartment | Wt, grams |
|---|---|
| Calcium hypochlorite* | 0.15 |
| Second compartment | Wt, grams |
| Poly aluminium chloride | 0.40 |
| Poly acrylamide | 0.08 |
| Bentonite clay | 1.25 |
| Anhydrous Sodium thiosulphate | 0.10 |
| Calcium oxide | 0.03 |

| | |
|---|---|
| * Calcium hypochlorite granules as per the invention was used. | |

About 3000 such sachets were prepared with out any stoppage of the packing machine. About ten randomly selected samples were used for purifying water having a turbidity of about 80-90 NTU. The method used to purify water is given below:

### Method of purifying water:

A test water having the indicated amount of turbidity was prepared. Contents of the first compartment were added to 10 litres of test water and stirred for one minute and allowed to stay for five minutes. The contents of the second compartment was then added and stirred for one minute and allowed to stay for five minutes. The water was then filtered through a coarse clean cloth. The chlorine content of the water before addition of the contents of the second compartment and after filtration was determined. The turbidity of the water before addition of the contents of the first compartment and after filtration was also measured. A turbidity value less than 1 NTU is generally considered acceptable. The data is summarized in Table - 7.

**Table - 7**

| Ex. | After addition of contents of first compartment | | After addition of contents of second compartment | | Residual chlorine quenched? |
|---|---|---|---|---|---|
| | % Moisture | Available Chlorine in treated water | Turbidity, NTU** | | |
| | | | Test Water | Treated Water | |
| 10 | 2.04 | 8.15 | 81 | 0.69 | Yes |
| 11 | 1.92 | 8.72 | 81 | 0.50 | Yes |
| 12 | 1.71 | 8.33 | 81 | 0.8 | Yes |
| 13 | 1.52 | 8.54 | 81 | 0.85 | Yes |
| 14 | 1.76 | 8.36 | 81 | 0.94 | Yes |
| 15 | 3.01 | 8.93 | 81 | 0.82 | Yes |
| 16 | 1.75 | 8.10 | 81 | 0.76 | Yes |
| 17 | 1.35 | 8.21 | 87 | 0.80 | Yes |
| 18 | 2.03 | 8.57 | 87 | 0.93 | Yes |
| 19 | 2.28 | 8.82 | 87 | 0.99 | Yes |

The data in Table- 7 indicates that highly pure water can be prepared in a very consistent manner in a high speed packing machine using a two compartment sachet with the first compartment packed with calcium hypochlorite in very small amounts and the second compartment packed with a flocculating composition.

### Comparative Example E and F: Effect of type of packing material:

### Comparative Example - E:

Calcium hypochlorite granules as used in Example - 1 were packed in sachet made of a laminate of low density polyethylene (LDPE) on the inside overlayed by a layer of high density poly ethylene (HDPE).

### Comparative Example - F:

Calcium hypochlorite granules as used in Example - 1 were packed in sachet made of a laminate of polypropylene (PP) on the inside overlayed by a layer of high density poly ethylene (HDPE).

Sachets of Comparative Example E and F and those from Example - 1 were stored in a chamber maintained at 40 °C and 85% humidity. The samples were checked to see if it could meet the criterion of available chlorine of at least 6 ppm when the granules were dissolved in 10 litres of water after 12 weeks of such storage. The results are summarised in Table - 8.

**Table - 8**

| Examples | Stability |
|---|---|
| Example - 1 | Yes |
| Comp Ex - E | No |
| Comp Ex - F | No |

The invention thus provides for a water purification system that enables packing of calcium hypochlorite in a sachet in small amount of 0.05 to 0.5 grams which is stable to ensure sufficient available chlorine till used by the consumer to purify drinking water. The invention ensures high reliability of weighment of such small amounts. The flocculation-disinfection system of the invention is able to meet the stringent WHO criteria of log 6 removal of bacteria, log 4 removal of virus and log 3 removal of cysts from impure water.

## Claims

1. A water purification system comprising a sachet containing 0.05 to 0.5 grams of granules of calcium hypochlorite having 55 to 68% available chlorine, and up to 3% moisture, at least 80% of said granules having particle size between 300 to 850 microns; wherein said sachet contains two compartments, a first compartment containing said granules, and a second compartment containing a flocculating composition; and wherein said flocculating composition comprises a quencher.

2. A water purification system as claimed in claim 1 wherein said sachet is made of a of a laminate of a polymer and a metal.

3. A water purification system as claimed in any one of the preceding claims wherein available chlorine in said granules reduces by less than 20% when said sachet is stored for three months under 40°C and 85% relative humidity.

4. A water purification system as claimed in any one of the preceding claims wherein the external surface area of said first compartment is less than the external surface area of said second compartment.

5. A water purification system as claimed in any one of the preceding claims wherein said flocculating composition comprises:
(i) a coagulating agent, which is a water soluble salt of a trivalent inorganic metal;
(ii) a flocculating agent, which is a high molecular weight water soluble polymer;
and
(iii) an adsorbent clay.

6. A water purification system as claimed in any one of the preceding claims wherein the flocculating composition comprises a buffering agent.

7. A water purification system as claimed in claim 6 wherein said buffering agent is sodium carbonate, calcium oxide or sodium bicarbonate.

8. A method of purifying water using the water purification system as claimed in any one of the preceding claims 1 to 7 comprising the steps of
(i) mixing the contents of said first compartment with impure water, followed by;
(ii) mixing the contents of said second compartment, to form flocs therein; and
(iii) separating said flocs from said impure water to get purified water.

9. A method according to claim 8, wherein step (i) lasts for a period of time of 0.5 to 5 minutes and wherein the mixture is allowed to stand for 2 to 10 minutes before commencing step (ii).

10. A method according to claim 8 or 9, wherein step (ii) lasts for a period of time of 0.5 to 5 minutes and wherein the mixture is allowed to stand for 2 to 10 minutes before commencing step (iii)

11. A method of purifying water as claimed in any one of claims 8 to 10 wherein 10 to 50 litres of water is purified.

12. Use of a water purifying composition according to any one of claims 1 to 7, for obtaining a 6-log removal of bacteria, 4-log removal of viruses and 3-log removal of cysts.

13. A method of forming and filling the sachet as claimed in any one of the claims 1 to 7 comprising the steps of
(i) forming a sachet by sealing the overlapping longitudinal and bottom edges of two superimposed laminates;
(ii) providing a seal across a longitudinal section of the sachet to form two compartments;
(iii) filling said first compartment of the sachet with said calcium hypochlorite granules from a cup of predetermined volume and said second compartment of the sachet with the flocculating composition; and
(iv) sealing the overlapping top edges.

14. Use of granules of calcium hypochlorite having 55 to 68% available chlorine, and up to 3% moisture, at least 80% of said granules having particle size between 300 to 850 microns for packing in a sachet in an amount in the range of 0.05 to 0.5 grams; wherein said sachet contains two compartments, a first compartment containing said granules, and a second compartment containing a flocculating composition; and wherein said flocculating composition comprises a quencher.

## Patentansprüche

1. Wasserreinigungssystem, umfassend einen Beutel, der 0,05 bis 0,5 Gramm Calciumhypochlorit-Körner mit 55 bis 68 % verfügbarem Chlor und bis zu 3 % Feuchtigkeit enthält, wobei wenigstens 80 % der Körner eine Partikelgröße von zwischen 300 und 850 Mikrometer haben; wobei der Beutel zwei Kompartimente enthält, wobei ein erstes Kompartiment die Körner enthält und ein zweites Kompartiment ein Flockungsmittel enthält, und wobei das Flockungsmittel einen Quencher umfasst.

2. Wasserreinigungssystem, wie es in Anspruch 1 beansprucht ist, wobei der Beutel aus einem Laminat aus einem Polymer und einem Metall hergestellt ist.

3. Wasserreinigungssystem, wie es in einem der vorangehenden Ansprüche beansprucht ist, wobei sich verfügbares Chlor in den Körnern um weniger als 20 % verringert, wenn der Beutel für drei Monate unter 40 °C und 85 % relativer Feuchtigkeit gelagert wird.

4. Wasserreinigungssystem, wie es in einem der vorangehenden Ansprüche beansprucht ist, wobei die äußere Oberfläche des ersten Kompartiments kleiner ist als die äußere Oberfläche des zweiten Kompartiments.

5. Wasserreinigungssystem, wie es in einem der vorangehenden Ansprüche beansprucht ist, wobei das Flockungsmittel umfasst:
(i) ein Koagulierungsmittel, das ein wasserlösliches Salz eines dreiwertigen anorganischen Metalls ist;
(ii) ein Flockungsmittel, das ein hochmolekulargewichtiges wasserlösliches Polymer ist und
(iii) einen Ton als Adsorbens.

6. Wasserreinigungssystem, wie es in einem der vorangehenden Ansprüche beansprucht ist, wobei das Flockungsmittel ein Puffermittel umfasst.

7. Wasserreinigungssystem, wie es in Anspruch 6 beansprucht ist, wobei das Puffermittel Natriumcarbonat, Calciumoxid oder Natriumbicarbonat ist.

8. Verfahren zur Reinigung von Wasser unter Verwendung des Wasserreinigungssystems, wie es in einem der vorangehenden Ansprüche 1 bis 7 beansprucht ist, umfassend die Schritte:
(i) Mischen der Inhalte des ersten Kompartiments mit unreinem Wasser, gefolgt von einem
(ii) Zumischen der Inhalte des zweiten Kompartiments, um darin Flocken zu bilden und
(iii) Abtrennen der Flocken von dem unreinen Wasser unter Erhalt von reinem Wasser.

9. Verfahren gemäß Anspruch 8, wobei Schritt (i) über einen Zeitraum von 0,5 bis 5 Minuten andauert und wobei das Gemisch für 2 bis 10 Minuten stehengelassen wird, bevor mit Schritt (ii) begonnen wird.

10. Verfahren gemäß Anspruch 8 oder 9, wobei Schritt (ii) über einen Zeitraum von 0,5 bis 5 Minuten andauert und wobei das Gemisch für 2 bis 10 Minuten stehengelassen wird, bevor mit Schritt (iii) begonnen wird.

11. Verfahren zur Reinigung von Wasser, wie es in einem der Ansprüche 8 bis 10 beansprucht ist, wobei 10 bis 50 Liter Wasser gereinigt werden.

12. Verwendung einer Wasserreinigungszusammensetzung gemäß einem der Ansprüche 1 bis 7 zur Erreichung einer 6-log-Entfernung von Bakterien, einer 4-log-Entfernung von Viren und einer 3-log-Entfernung von Zysten.

13. Verfahren zur Bildung und Füllung des Beutels, wie in einem der Ansprüche 1 bis 7 beansprucht, umfassend die Schritte:
(i) Bilden eines Beutels durch Versiegeln der überlappenden Längs- und Bodenränder von zwei übereinander gelegten Laminaten;
(ii) Bereitstellen einer Versiegelung über einen Längsabschnitt des Beutels unter Bildung von zwei Kompartimenten;
(iii) Füllen des ersten Kompartiments des Beutels mit Calciumhypochlorit-Körnern aus einem Becher mit vorgegebenem Volumen und des zweiten Kompartiments des Beutels mit dem Flockungsmittel und
(iv) Versiegeln der überlappenden oberen Ränder.

14. Verwendung von Calciumhypochlorit-Körnern mit 55 bis 68 % verfügbarem Chlor und bis zu 3 % Feuchtigkeit, wobei wenigstens 80 % der Körner eine Partikelgröße zwischen 300 und 850 Mikrometer haben, zur Packung in einen Beutel in einer Menge im Bereich von 0,05 bis 0,5 Gramm, wobei der Beutel zwei Kompartimente enthält, wobei ein erstes Kompartiment die Körner enthält und ein zweites Kompartiment ein Flockungsmittel enthält, und wobei das Flockungsmittel einen Quencher umfasst.

## Revendications

1. Système de purification d'eau comprenant un sachet contenant 0,05 à 0,5 gramme de granulés d'hypochlorite de calcium ayant 55 % à 68 % de chlore disponible et jusqu'à 3 % d'humidité, au moins 80 % desdits granulés ayant une taille de particule entre 300 et 850 microns ; dans lequel ledit sachet contient deux compartiments, un premier compartiment contenant lesdits granulés et un second compartiment contenant une composition de floculation ; et dans lequel ladite composition de floculation comprend un désactivateur.

2. Système de purification d'eau selon la revendication 1, dans lequel ledit sachet est formé à partir d'un stratifié composé d'un polymère et d'un métal.

3. Système de purification d'eau selon l'une quelconque des revendications précédentes, dans lequel le chlore disponible dans lesdits granulés réduit de moins de 20 % quand ledit sachet est stocké pendant trois mois à 40 °C et sous 85 % d'humidité relative.

4. Système de purification d'eau selon l'une quelconque des revendications précédentes, dans lequel la surface externe dudit premier compartiment est inférieure à la surface externe dudit second compartiment.

5. Système de purification d'eau selon l'une quelconque des revendications précédentes, dans lequel ladite composition de floculation comprend :
(i) un agent de coagulation, lequel est un sel hydrosoluble d'un métal trivalent inorganique ;
(ii) un agent de floculation, lequel est un polymère hydrosoluble de poids moléculaire élevé,
et
(iii) une argile adsorbante.

6. Système de purification d'eau selon l'une quelconque des revendications précédentes, dans lequel la composition de floculation comprend un agent tampon.

7. Système de purification d'eau selon la revendication 6, dans lequel ledit agent tampon est le carbonate de sodium, l'oxyde de calcium ou le bicarbonate de sodium.

8. Méthode de purification de l'eau utilisant le système de purification d'eau selon l'une quelconque des revendications 1 à 7 précédentes, comprenant les étapes suivantes :
(i) le mélange du contenu dudit premier compartiment avec de l'eau impure, puis ;
(ii) le mélange du contenu dudit second compartiment pour y former des floculats ; et
(iii) la séparation desdits floculats de l'eau impure pour obtenir une eau purifiée.

9. Méthode selon la revendication 8, dans laquelle l'étape (i) dure pendant une période de temps allant de 0,5 à 5 minutes et dans laquelle le mélange est laissé au repos pendant 2 à 10 minutes avant de commencer l'étape (ii).

10. Méthode selon la revendication 8 ou 9, dans laquelle l'étape (ii) dure pendant une période de temps allant de 0,5 à 5 minutes et dans laquelle le mélange est laissé au repos pendant 2 à 10 minutes avant de commencer l'étape (iii).

11. Méthode de purification de l'eau selon l'une quelconque des revendications 8 à 10, dans laquelle 10 à 50 litres d'eau sont purifiés.

12. Utilisation d'une composition de purification d'eau selon l'une quelconque des revendications 1 à 7, pour obtenir une élimination de 6-log des bactéries, une élimination de 4-log des virus et une élimination de 3-log des sporocystes.

13. Méthode de formation et de remplissage du sachet selon l'une quelconque des revendications 1 à 7, comprenant les étapes suivantes :
(i) la formation d'un sachet en scellant les bords longitudinaux et inférieurs de recouvrement de deux stratifiés superposés ;
(ii) la fourniture d'un joint étanche en travers d'une section longitudinale du sachet pour former deux compartiments ;
(iii) le remplissage dudit premier compartiment du sachet avec lesdits granulés d'hypochlorite de calcium à partir d'une coupelle de volume prédéterminé et dudit second compartiment du sachet avec la composition de floculation ; et
(iv) le scellage des bords supérieurs de recouvrement.

14. Utilisation de granulés d'hypochlorite de calcium ayant 55 % à 68 % de chlore disponible et jusqu'à 3 % d'humidité, au moins 80 % desdits granulés ayant une taille de particule entre 300 et 850 microns, pour remplir un sachet avec une quantité située dans la plage allant de 0,05 à 0,5 gramme ; dans lequel ledit sachet contient deux compartiments, un premier compartiment contenant lesdits granulés et un second compartiment contenant une composition de floculation ; et dans lequel ladite composition de floculation comprend un désactivateur.
